(19) Europäisches Patentamt European Patent Office Office européen des brevets

(11) **EP 3 526 597 B1**

(12) **FASCICULE DE BREVET EUROPEEN**

(45) Date de publication et mention de la délivrance du brevet:
**17.03.2021 Bulletin 2021/11**

(21) Numéro de dépôt: **17780437.4**

(22) Date de dépôt: **10.10.2017**

(51) Int Cl.:
*G01N 29/04* (2006.01)       *G01H 5/00* (2006.01)
*G01S 15/89* (2006.01)       *G01N 29/06* (2006.01)
*G01N 29/07* (2006.01)       *G01N 29/26* (2006.01)
*G01N 29/44* (2006.01)

(86) Numéro de dépôt international:
**PCT/EP2017/075814**

(87) Numéro de publication internationale:
**WO 2018/069321 (19.04.2018 Gazette 2018/16)**

(54) **PROCEDE ET DISPOSITIF DE DETECTION ET DE CARACTERISATION D'UN ELEMENT REFLECTEUR DANS UN OBJET**

VERFAHREN UND VORRICHTUNG ZUM ERFASSEN UND CHARAKTERISIEREN EINES REFLEKTIERENDEN ELEMENTS IN EINEM OBJEKT

METHOD AND DEVICE FOR DETECTING AND CHARACTERIZING A REFLECTING ELEMENT IN AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2016 FR 1659860**

(43) Date de publication de la demande:
**21.08.2019 Bulletin 2019/34**

(73) Titulaire: **Commissariat à l'Énergie Atomique et aux Énergies Alternatives
75015 Paris (FR)**

(72) Inventeurs:
• **BREDIF, Philippe**
  **75013 Paris (FR)**
• **IAKOVLEVA, Ekaterina**
  **91470 Limours (FR)**
• **LESSELIER, Dominique**
  **91191 Gif-Sur-Yvette (FR)**
• **ROY, Olivier**
  **35136 St Jacques De La Lande (FR)**
• **SY, Kombossé**
  **91400 Orsay (FR)**

(74) Mandataire: **Marks & Clerk France
Immeuble "Visium"
22, avenue Aristide Briand
94117 Arcueil Cedex (FR)**

(56) Documents cités:
**FR-A1- 3 029 636**

• **PAILLARD S ET AL: "NEW ULTRASONIC ARRAY IMAGING OF CRACK-TYPE DEFECTS BASED ON SIMULATION-HELPED PROCESSING", 10TH EUROPEAN CONFERENCE ON NON-DESTRUCTIVE TESTING 2010 (ECNDT) ; 7-11 JUNE 2010; MOSCOW, RUSSIA, CURRAN, RED HOOK, NY , vol. 5 1 août 2010 (2010-08-01), pages 3670-3677, XP002724437, ISBN: 978-1-61782-791-4 Extrait de l'Internet: URL:http://www.ndt.net/article/ecndt2010/r eports/4_05_18.pdf**
• **P. CALMON ET AL: "MODEL BASED RECONSTRUCTION OF UT ARRAY DATA", AIP CONFERENCE PROCEEDINGS, vol. 975, 1 janvier 2008 (2008-01-01), pages 699-706, XP055073257, ISSN: 0094-243X, DOI: 10.1063/1.2902730**
• **FIDAHOUSSEN A ET AL: "Imaging of defects in several complex configurations by simulation-helped processing of ultrasonic array data", REVIEW OF QUANTITATIVE NONDESTRUCTIVE EVALUATION,, vol. 29, 1 janvier 2009 (2009-01-01), pages 847-854, XP009168271, cité dans la demande**

## Description

L'invention concerne un procédé et un dispositif permettant de définir un ou plusieurs modes de reconstruction pour détecter et caractériser des défauts, notamment par imagerie et par focalisation synthétique multimodale.

Elle trouve aussi son application dans tout domaine où l'on cherche à détecter et à caractériser des éléments capables de réfléchir une onde ultrasonore, les éléments étant enfouis dans un objet et pouvant être un défaut de structure, une dislocation, une fissure, etc.

Elle peut aussi être mise en œuvre pour caractériser le profil d'une pièce.

Dans le domaine du contrôle non destructif, de nombreuses techniques d'imagerie ultrasonores sont à présent disponibles. Ces techniques représentent un outil majeur pour les applications de contrôle non destructif des matériaux et des assemblages dans de nombreux domaines industriels de pointe tels que l'énergie, la pétrochimie, la sidérurgie, les transports. Elles permettent d'obtenir des informations de localisation absolues et des descriptions de plus en plus réalistes de la morphologie des défauts de structure.

Les méthodes de caractérisation sont étroitement liées à l'imagerie ultrasonore. Dans ce sens, les techniques multiéléments connues sous la désignation anglo-saxonne « Phased Array » ont considérablement amélioré les possibilités d'analyses.

Les méthodes de focalisation synthétiques telles que les méthodes de focalisation totale ou TFM (abrégé anglo-saxon de Total Focussing Method) proposent, par exemple, une imagerie échographique réaliste du matériau inspecté, en exploitant une instrumentation multiélément conventionnelle. Les images TFM apportent une résolution optimale dans toute la vue obtenue. Par construction, ces images TFM offrent comme avantages d'être peu sensibles aux effets d'ombrage et aux rebonds multiples. Selon les modes de propagation et la polarité des ondes sélectionnées, l'imagerie TFM permet de dessiner des défauts volumiques ou des défauts plans verticaux. Cette représentation réaliste apporte un avantage important pour la caractérisation des défauts, en particulier pour des fissures. Les images TFM sont donc plus faciles à analyser ; elles présentent moins de risques d'interprétation erronée et permettent d'envisager des contrôles plus rapides par des opérateurs moins spécialisés.

Les méthodes de focalisation synthétique produisent des images par l'enchaînement de deux étapes principales: une étape d'acquisition des signaux ultrasonores et une étape de construction des images à partir des données précédemment enregistrées. Ces deux étapes peuvent être réalisées de différentes manières exposées ci-après.

L'un des principaux types d'enregistrements des signaux ultrasonores sur lesquels seront ensuite appliqués des algorithmes de reconstruction des données est l'enregistrement de type FMC (Full Matrix Capture) ou matrice interéléments tel que décrit dans le document de C.Holmes, B.W. Drinkwater, P.D. Wilcox, intitulé « Post-Processing of the full matrix of ultrasonic transmit-receive array data for non-destructive evaluation », NDT&E international vol.38, pp 701-711, par exemple. Dans ce cas, pour un capteur ultrasonore constitué de plusieurs éléments pilotables individuellement, ce type d'acquisition consiste à enregistrer un ensemble de $M \times N$ signaux élémentaires, $S_{ij}(t)$, avec $1 \leq i \leq M$ et $1 \leq j \leq N$, où $M$ et $N$ représentent respectivement les nombres d'éléments utilisés en émission et en réception. L'indice $i$ dénote le numéro de l'élément émetteur et l'indice $j$ celui de l'élément récepteur. D'autres méthodes d'acquisition de données connues de l'homme du métier telles que l'émission d'onde plane connue sous l'abréviation anglo-saxonne PWI (Plane Wave Imaging) ou la méthode SAFT (abréviation anglo-saxonne de Synthetic Aperture Focusing Technique) peuvent être utilisées.

Pour la construction des images, les méthodes de focalisation synthétique consistent à sommer, de façon cohérente, les contributions extraites des signaux ultrasonores précédemment enregistrés en chaque point de la zone inspectée dans un matériau. Ces méthodes peuvent être réalisées dans le domaine temporel ou fréquentiel. Parmi celles-ci, la méthode TFM précitée constitue l'une de ces principales méthodes d'imagerie. L'algorithme associé consiste à sommer de façon cohérente l'amplitude des signaux reçus pour obtenir des interférences constructives, et ainsi des maxima d'amplitude, à l'endroit où sont effectivement localisés les défauts à l'origine des échos ultrasonores détectés. Il s'appuie principalement sur l'exploitation des temps de vol évalués théoriquement à partir de modèles directs. Cet algorithme peut se résumer ensuite en trois étapes :

1. La définition d'une zone de reconstruction (positions, dimensions et nombre de points de calcul),
2. Pour chaque point $P$ de la zone de reconstruction définie et pour chaque couple émetteur-récepteur $(i,j)$, le calcul du temps de vol théorique, $T_{ij}(P)$ correspondant au parcours entre l'émetteur $i$ et le récepteur $j$ et passant par le point $P$,
3. Pour chaque point $P$ de la zone, la sommation des amplitudes extraites des signaux $S_{ij}(t)$ au temps $t = T_{ij}(P)$, ce qui peut s'écrire :

$$I(P) = \sum_{i=1}^{M} \sum_{j=1}^{N} S_{ij}\left(T_{ij}(P)\right) \quad (1).$$

Cette focalisation peut être réalisée en considérant, à la deuxième étape, plusieurs modes de propagation (direct, échos de coin, échos indirects...), et plusieurs types d'ondes (longitudinales L ou transversales T) tels que décrits par exemple dans le document de A. Fidahoussen, P. Calmon, M. Lambert, S. Paillard, S. Chatillon, « Imaging of defects in several complex configurations by simulation-helped processing of ultrasonic array data », Review of progress in QNDE, Vol. 29, pp. 847-854, 2010

S. Paillard et al: "New ultrasonic array imaging of crack-type defects based on simulation-helped processing", août 2010, décrit une méthode pour générer un image d'un défaut.

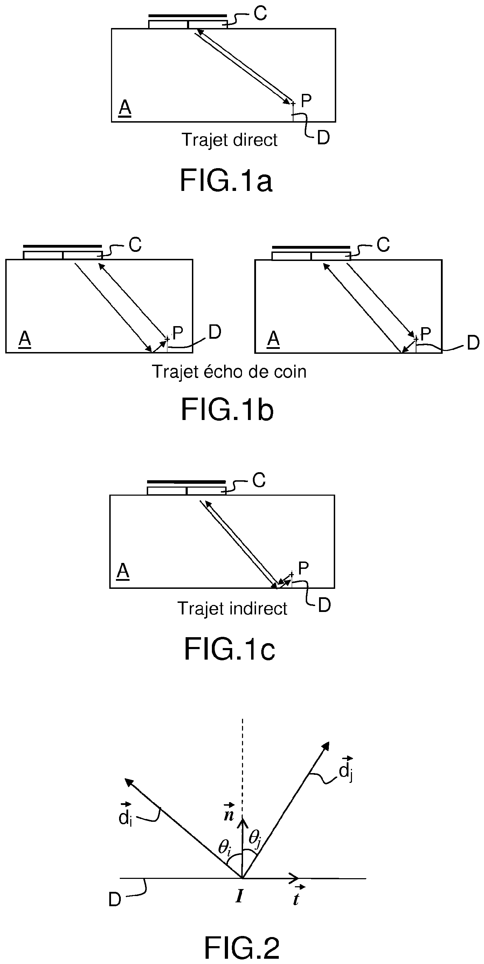

Les figures 1a, 1b et 1c illustrent différents types de trajets. Pour le mode de reconstruction direct, figure 1a, les parcours mis en jeu correspondent à des trajets directs entre les différents éléments du capteur C et les points P de la zone de reconstruction, c'est-à-dire sans rebond sur le fond de la pièce, comme illustré sur cette figure 1a. Pour les modes de reconstruction échos de coin et échos indirects, (figures 1b et 1c), les trajets pris en compte pour le calcul des temps de vol dans l'équation (1) peuvent inclure une ou plusieurs réflexions sur le fond de la pièce A au cours du trajet entre l'élément émetteur et le point de la zone de reconstruction et/ou au cours du trajet entre le point de reconstruction et l'élément récepteur. La polarisation de l'onde entre deux interactions successives, longitudinale ou transversale est également prise en compte.

Le fait que chaque reconstruction TFM soit associée à un mode de propagation (direct, écho de coin, rebonds multiples dans la pièce...), ainsi qu'à la polarité des ondes ultrasonores (longitudinale ou transversale), donne lieu à un nombre important d'images, dont chacune peut porter des informations différentes et complémentaires sur la position, sur la nature et sur la géométrie des défauts D recherchés.

La pertinence d'une image associée à un mode de propagation donné varie en fonction de la configuration de contrôle considérée (capteur utilisé, géométrie de la pièce inspectée, position et orientation du défaut...). Cette pertinence n'est de plus pas nécessairement vraie pour tous les points d'une même zone de reconstruction.

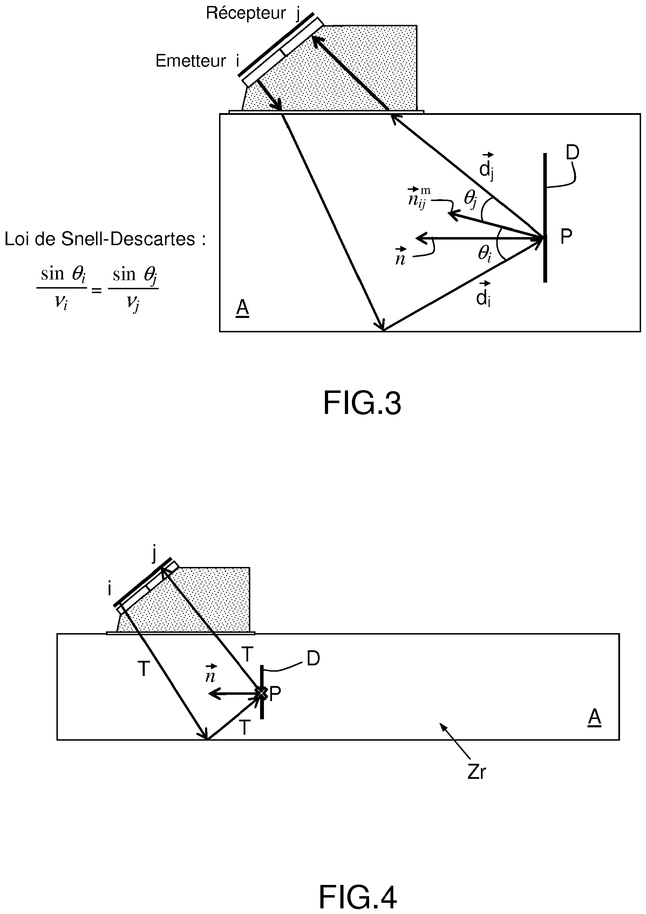

L'art antérieur décrit aussi un « compteur de réflexions », illustré à la figure 2. Pour un défaut plan D d'orientation connue, cet estimateur consiste à comptabiliser le nombre de couples émetteurs i et récepteurs j, pour lesquels un trajet vérifiant la loi de Snell-Descartes (figure 3) existe suivant le mode de reconstruction considéré. Ainsi, pour un mode de reconstruction $m$, en supposant que chaque point $P$ de la zone de reconstruction appartienne à un défaut plan de normale $\vec{n}$, le Compteur de Réflexions noté $C^m(P,\vec{n})$, est donné par :

$$C^m(P,\vec{n}) = \sum_{i,j=1}^{N} c_{ij}^m(P,\vec{n}) \qquad (2)$$

où

$$c_{ij}^m = \begin{cases} 1 & \text{si } \left| \vec{n}_{ij}^m(P) \cdot \vec{n} \right| = 1 \\ 0 & \text{sinon} \end{cases}$$

$\vec{n}_{ij}^m(P)$ : la normale formée par les directions aller $\vec{d}_i$ et retour $\vec{d}_j$ de l'onde,

$i$ : indice élément émetteur,

$j$ : indice élément récepteur,

$N$ : nombre d'éléments émetteur-récepteur composant le traducteur,

$\theta_i$, l'angle que fait la direction aller $\vec{d}_i$ avec la normale $\vec{n}_{ij}^m$ pour un mode de reconstruction m, et $\theta_r$, l'angle que fait la direction retour $\vec{d}_r$ avec la normale $\vec{n}_{ij}^m$ pour un mode de reconstruction m.

Une méthode de reconstruction ultrasonore est décrite, par exemple, au chapitre 5.3.2 de la thèse intitulée « Développement de méthodes de reconstruction ultrasonore pour la localisation et la caractérisation de défauts » soutenue par Alex Fidahoussen le 21 septembre 2012.

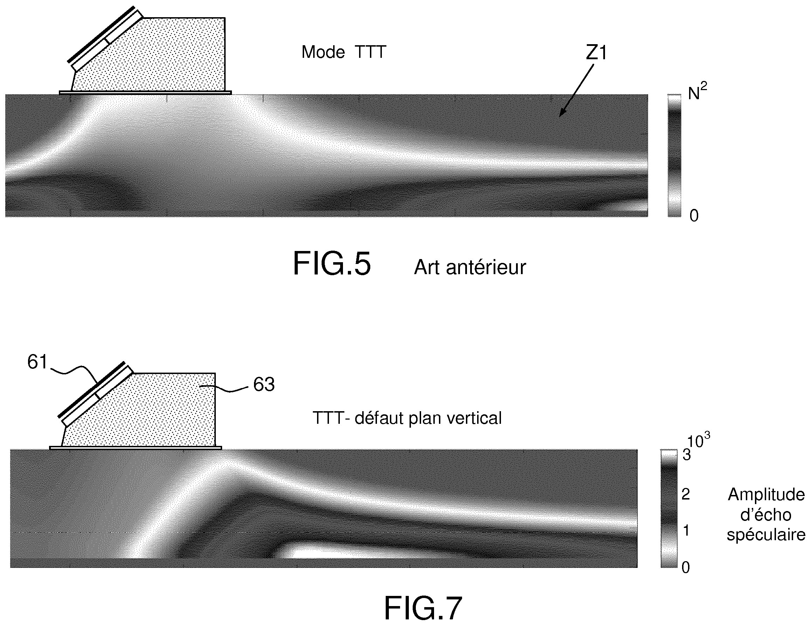

Dans l'exemple suivant, figure 4, on considère un défaut plan D d'orientation verticale, dans un objet A à inspecter, pour une zone de reconstruction donnée Zr et pour une reconstruction en mode écho de coin (i.e. avec un rebond sur le fond de l'objet) ne prenant en compte que des ondes transversales T. L'évaluation du Compteur de Réflexion $C^m(P,\vec{n})$ en chaque point $P$ de cette zone de reconstruction Zr permet de constituer une cartographie (figure 5) dont les valeurs sont codées suivant une palette de couleurs représentée sur la figure par des zones de grisés nuancés. Ainsi, pour un mode de reconstruction $m$, cette cartographie indique que dans la zone Z1 (Amplitude =0), aucun trajet spéculaire ne peut exister entre un émetteur *i*, un défaut plan d'orientation verticale et un récepteur *j*. Cet estimateur apporte des informations nécessaires mais non suffisantes pour prédire pleinement la pertinence d'un mode de reconstruction pour détecter un défaut plan d'orientation connue situé dans la zone de reconstruction. En effet, le mode de reconstruction ne considère que les trajets géométriques, et d'autres considérations physiques doivent également être prises en compte.

La demande de brevet FR 3 029 636 décrit un procédé d'imagerie par ultrasons utilisant un transducteur multiélément et basé sur la technique de reconstruction appelée « focalisation en tous points ».

L'un des objectifs de l'invention est de proposer un outil permettant de prédire, pour une configuration du système de détection de défauts et un type de défauts recherchés, le ou les modes de reconstruction m les plus pertinents à utiliser pour obtenir une meilleure visualisation et caractérisation de défauts présents dans une pièce. Plus précisément, pour chaque point P appartenant à une zone de reconstruction Zr, cet outil permet d'estimer la capacité d'un mode de reconstruction à pouvoir détecter ou non, les faciès d'un défaut plan à partir d'échos spéculaires dont le parcours vérifie la loi de Snell-Descartes, tel qu'il est décrit dans le document https://fr.wikipedia.org/wiki/Lois de Snell-Descartes ou, de manière plus générale, pour tout objet ou élément plan d'orientation connue et qui réfléchit les ondes ultrasonores.

Le ou les modes de reconstruction sélectionnés à partir des résultats sur la capacité d'un mode seront alors utilisés dans un système de détection et de caractérisation de défauts.

L'invention peut notamment être assimilée à un estimateur d'échos spéculaires pour un mode de reconstruction considéré. L'estimateur consiste notamment à calculer, en chaque point d'une zone d'intérêt, la contribution unitaire de chaque couple émetteur-récepteur (i, j) d'un capteur de détection à un écho spéculaire provenant d'un défaut plan d'orientation prédéfinie. Ce calcul peut être réalisé au moyen d'un outil de simulation de propagation d'ondes élastodynamiques connu de l'homme du métier.

La sommation de toutes ces contributions (énergie réfléchie) en chacun des points d'une zone d'intérêt permet alors de prédire l'amplitude de détection d'un type de défaut par un écho spéculaire. Une cartographie de ces amplitudes, analogue à celle proposée pour le compteur de réflexions de l'art antérieur mais plus précise, peut ainsi être réalisée et, à partir de cette cartographie, un opérateur pourra sélectionner un ou plusieurs modes de reconstruction pour inspecter un objet.

L'invention concerne un procédé pour déterminer au moins un mode de reconstruction *m* d'un objet réflecteur présentant une partie capable de générer des réflexions spéculaires d'ondes ultrasonores, au sein d'un volume donné Zr, caractérisé en ce qu'il comporte au moins les étapes suivantes :

- pour chaque point P du volume donné Zr, déterminer une valeur de champ ultrasonore $A_{ij}^m(P)$ pour N couples (i, j) d'émetteurs-récepteurs et pour un mode de détection m,

$$C^m(P,\vec{n}) = \sum_{i,j=1}^{N} c_{ij}^m(P,\vec{n})$$

- calculer un nombre de réflexions de l'onde      où

$$c_{ij}^m = \begin{cases} 1 & \text{si } \left| \vec{n}_{ij}^m(P) \cdot \vec{n} \right| = 1 \\ 0 & \text{sinon} \end{cases}$$

avec $\vec{n}_{ij}^m(P)$ la normale formée par la direction « aller » $\vec{d}_i$ et la direction « retour » $\vec{d}_j$ de l'onde ultrasonore émise et réfléchie par l'élément réflecteur,

- calculer la valeur d'énergie $E^m(P,\vec{n})$ pour chaque point P de la zone Zr, avec $\vec{n}$ la normale à l'élément réflecteur et pour plusieurs modes de détection *m,* en sommant sur les N couples d'émetteurs-récepteurs, (i, j), le produit de la valeur de champ ultrasonore par le nombre de réflexions de l'onde : avec

$$E^m(P,\vec{n}) = \sum_{i,j=1}^{N} A_{ij}^m(P) c_{ij}(P,\vec{n})$$

- comparer la ou lesdites valeurs d'énergie $E^m(P,\vec{n})$ obtenues à un critère donné et, à partir du résultat obtenu, sélectionner au moins un mode de reconstruction *m* à utiliser pour détecter et caractériser l'élément réflecteur.

Selon une variante de réalisation, on détermine le ou les modes de reconstruction *m* à utiliser en choisissant les énergies $E^m(P,\vec{n})$ qui sont supérieures à une valeur seuil Es.

Selon une autre variante, le ou les modes de reconstruction m à utiliser sont déterminés en limitant le nombre de mode de reconstruction à une valeur donnée, offrant le meilleur compromis entre énergie et dimension de la zone de reconstruction sélectionnée.

Le calcul de l'énergie peut prendre en compte les coefficients de réflexion $R(\vec{n}_{ij}, \vec{n})$ correspondant à l'interaction de l'onde avec une surface plane définie par la normale $\vec{n}$ à un point $P$ :

$$E^m(P, \vec{n}) = \sum_{i,j=1}^{N} A_{ij}^m(P) R(\vec{n}_{ij}, \vec{n}) c_{ij}(P, \vec{n}) .$$

La valeur d'énergie est, par exemple, déterminée en tenant compte du nombre de réflexions pondéré par une tolérance arbitraire :

$$c_{ij}^m(P) = \begin{cases} 1 & \text{si } \left| \vec{n}_{ij}^m(P) \cdot \vec{n} \right| = 1 \pm \varepsilon \\ 0 & \text{sinon} \end{cases}$$

L'élément réflecteur à détecter peut être un défaut plan disposé dans une pièce à inspecter, tel qu'une faille, une entaille.

L'invention concerne aussi un dispositif pour déterminer au moins un mode de détection pour un élément réflecteur d'ondes ultrasonores, au sein d'un volume donné Zr et par réflexions spéculaires et caractériser un ou plusieurs défauts dans une pièce A comportant au moins un transducteur ultrasonore pour émettre et recevoir des ondes ultrasonores et un dispositif de traitement adapté à utiliser le ou les modes de reconstruction obtenus par la mise en œuvre des étapes suivantes :

- pour chaque point P du volume donné Zr, déterminer une valeur de champ ultrasonore $A_{ij}^m(P)$ pour N couples (i, j) d'émetteurs-récepteurs et pour un mode de détection m,

$$C^m(P, \vec{n}) = \sum_{i,j=1}^{N} c_{ij}^m(P, \vec{n})$$

- calculer un nombre de réflexions de l'onde      où

$$c_{ij}^m = \begin{cases} 1 & \text{si } \left| \vec{n}_{ij}^m(P) \cdot \vec{n} \right| = 1 \\ 0 & \text{sinon} \end{cases}$$

avec $\vec{n}_{ij}^m(P)$ la normale formée par les directions « aller » $\vec{d}_i$ et « retour » $\vec{d}_j$ de l'onde ultrasonore émise et réfléchie par l'élément réflecteur,

- calculer la valeur d'énergie $E^m(P, \vec{n})$ pour chaque point P de la zone Zr, avec $\vec{n}$ la normale à l'élément réflecteur et pour plusieurs modes de détection m, en sommant sur les N couples d'émetteurs-récepteurs, (i, j), le produit de la valeur de champ ultrasonore par le nombre de réflexions de l'onde :
  avec

$$E^m(P, \vec{n}) = \sum_{i,j=1}^{N} A_{ij}^m(P) c_{ij}(P, \vec{n})$$

- comparer les valeurs d'énergies $E^m(P, \vec{n})$ obtenues à un critère donné et à partir du résultat obtenu sélectionner au moins un mode de reconstruction m à utiliser pour détecter et caractériser l'élément réflecteur.

Le procédé et le dispositif sont par exemple utilisés pour la détection de défauts dans une pièce soumise à des ondes ultrasonores.

L'invention sera mieux comprise et d'autres avantages apparaîtront à la lecture de la description qui suit, d'exemples donnés à titre illustratif et nullement limitatif, faite en regard des figures qui représentent :

- Figures 1a, 1b, 1c, une illustration des différents types de trajets,
- Figure 2, une illustration d'un compteur de réflexions selon l'art antérieur,
- Figure 3, une illustration d'un trajet selon la loi de Snell-Descartes,
- Figure 4, une illustration d'une zone de reconstruction au sein d'un objet et Figure 5, une cartographie de l'estimateur de « compteur de réflexions » selon l'art antérieur pour un mode de reconstruction,
- Figure 6, un exemple de dispositif pour la mise en œuvre du procédé selon l'invention,
- Figure 7, un résultat de cartographie des zones de détection les plus favorables obtenue après la mise en œuvre du procédé selon l'invention, et
- Figure 8, une illustration de la prédiction des possibilités de détection par l'invention, de deux défauts identiques situés dans deux régions différentes de l'objet A.

L'idée mise en œuvre pour le procédé selon l'invention consiste notamment à déterminer un mode de reconstruction adapté, permettant d'obtenir une image d'un défaut de manière précise et fiable, pour une configuration d'inspection connue et un type de défaut recherché. Le mode ainsi obtenu peut ensuite être utilisé pour la détection et la caractérisation de défauts dans un objet à inspecter.

Pour être mis en application, le procédé selon l'invention nécessite de connaître préalablement un certain nombre d'informations sur la pièce à inspecter et le dispositif de contrôle. Les informations requises sont alors les mêmes que celles nécessaires à l'obtention de l'image du défaut.

Ces informations concernent :

- La pièce à inspecter :

  ◦ La connaissance de la géométrie de la pièce suivant son épaisseur,
  ◦ La connaissance des vitesses de propagation des ondes d'intérêt (ondes longitudinales L et transversales T),
  ◦ La prise en compte d'autres propriétés physiques : l'anisotropie, l'atténuation des ondes considérées, etc. pour modéliser la propagation d'une onde dans la pièce à étudier, et effectuer le calcul du champ,

- Le ou les traducteurs multiéléments du capteur :

  ◦ La découpe élémentaire : linéaire, matriciel, annulaire...,
  ◦ Le nombre d'éléments considérés : N,
  ◦ Le pas, pris centre à centre, entre les éléments (pitch) constituant le capteur, afin de calculer les temps de vol nécessaires entre un émetteur, un point de focalisation de la pièce et un récepteur, les coordonnées des éléments du capteur étant connues,
  ◦ Le type de couplage : couplage par immersion ou au contact,
  ◦ La géométrie du sabot du capteur, ainsi que ses propriétés physiques (vitesse des ondes le traversant), afin d'estimer le temps de vol de l'onde ultrasonore dans le sabot. Le temps de vol total est la somme des temps de parcours dans le sabot et du temps de parcours dans le matériau à inspecter,

- La ou les positions du capteur sur la pièce lors de l'acquisition des signaux:
  ◦ Le réglage des éléments émetteur et récepteur, c'est-à-dire pour chaque tir, la définition :

    ▪ du ou des éléments actifs en émission, avec leur loi de retards associée,
    ▪ du ou des éléments actifs en réception, avec leur loi de retards associée.

- L'orientation du défaut plan recherché, définie par sa normale $\vec{n}$,
- L'ensemble des modes de reconstruction à considérer,
- La zone d'intérêt Zr dans laquelle on effectue les reconstructions.

Ces paramètres sont mis en œuvre dans le calcul de l'outil ou estimateur du mode de reconstruction selon l'invention.

Pour chaque mode m possible de reconstruction, l'invention consiste à déterminer, sur la base d'un estimateur d'échos spéculaires, la capacité de ce mode à pouvoir fournir ou non, par des réflexions spéculaires, l'image d'un défaut plan d'orientation connue, situé en n'importe quel point P de la zone d'intérêt Zr ou zone de reconstruction. Pour cela, l'estimateur doit fournir, sur toute cette zone de reconstruction Zr, une estimation de l'énergie ultrasonore réfléchie suivant ce type de réflexions, par exemple. Plus l'énergie calculée par l'estimateur sera importante, et meilleure sera la capacité de détection du mode de reconstruction considéré. L'estimateur est de plus capable de fournir des valeurs d'énergie comparables entre tous les modes de reconstruction considérés. Le mode de reconstruction retenu pourra alors être mis en œuvre dans un système de détection et de caractérisation de défauts. Les étapes permettant d'obtenir cet estimateur sont détaillées plus loin dans la description.

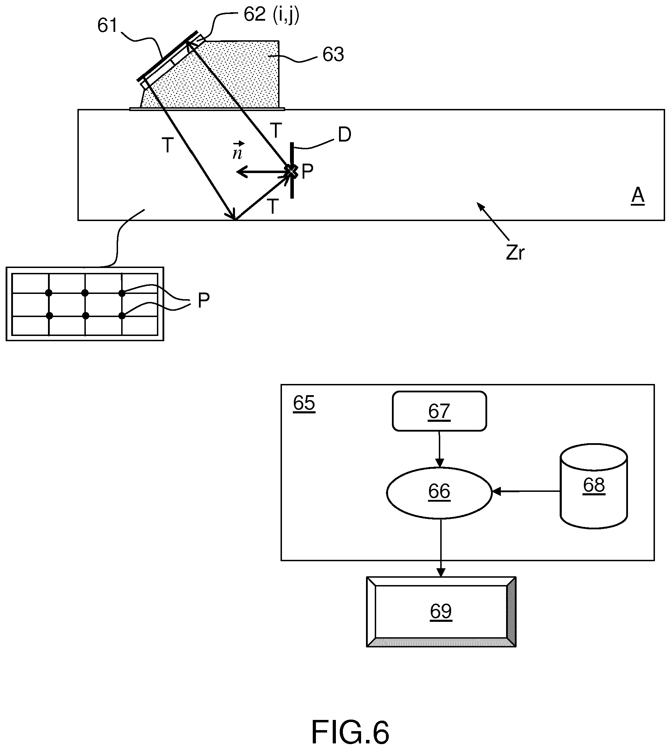

La figure 6 illustre un exemple de dispositif permettant la mise en œuvre de l'estimateur selon l'invention lors de l'inspection d'une pièce. Le dispositif comprend un capteur 61 (transducteur ultrasonore par exemple) comprenant plusieurs éléments émetteurs-récepteurs 62(i,j), sous forme de barrette linéaire par exemple, adaptés à émettre et à recevoir des ondes ultrasonores, le détecteur est positionné par exemple sur un support 63. Les émetteurs-récepteurs émettent des ondes ultrasonores qui sont réfléchies au sein de la pièce qui peut contenir un défaut D. Les signaux réfléchis sont captés par la matrice de réception (récepteurs) et numérisés selon un principe connu de l'homme du métier. Les signaux numériques correspondant sont, par exemple, mémorisés dans un fichier ou une mémoire (non représentés pour des raisons de simplification) pour être traités en temps réel ou en temps différé. Simultanément, la position du capteur correspondant à un enregistrement de signaux réfléchis et captés par la matrice de réception du capteur est mémorisée.

Le procédé selon l'invention a permis d'obtenir un outil ou estimateur qui va permettre par exemple de sélectionner un ou plusieurs modes de reconstruction les plus performants pour détecter les défauts dans une pièce examinée. Une façon de mettre en œuvre cet estimateur consiste par exemple à transmettre les données expérimentales des signaux numérisés et de la position du capteur de détection à un dispositif de traitement 65 comprenant un processeur 66 sur lequel est exécuté l'estimateur 67 afin de reconstruire une image de la pièce inspectée à partir de signaux reçus sur le capteur de détection et mémorisés par exemple dans une base de données 68.

Le processeur peut aussi comporter une sortie reliée à un dispositif d'affichage 69 des valeurs ainsi obtenues pouvant se présenter sous la forme d'une cartographie permettant à un opérateur de repérer les zones de la pièce dans lesquelles un défaut pourra être mieux détecté, en fonction d'un mode de reconstruction et donc sélectionner le meilleur mode de reconstruction.

Le procédé et le dispositif selon l'invention peuvent être utilisés dans le cas de contrôle en immersion qui suppose que le dispositif soit plongé dans un liquide, de l'eau dans la plupart des cas, les ondes se propageant alors dans le liquide avant d'être réfractées dans le matériau. Selon une autre application, il est mis en œuvre pour des contrôles au contact qui supposent que le capteur est placé sur un sabot constituant alors le milieu intermédiaire entre le capteur et la pièce à inspecter.

Pour la mise en œuvre du procédé selon l'invention, un maillage est défini au niveau de la zone de détection, afin de repérer les points P considérés dans le procédé selon l'invention. La lettre P désigne les points du maillage quelque soit leur coordonnée. Le maillage est défini comme un compromis entre l'obtention d'une image de qualité et le temps de calcul. Par exemple, le pas du maillage sera de l'ordre de $\lambda/6$ avec $\lambda$ la valeur de la longueur d'onde ou encore compris dans l'intervalle $[\lambda/8, \lambda/4]$.

L'amplitude de détection (*i.e.* l'énergie Ed) pour un défaut D peut alors être déterminée par sommation des contributions unitaires, de chaque couple émetteur-récepteur, calculées en chacun des points P du maillage de la zone de reconstruction Zr.

Pour un mode de reconstruction $m$, l'estimateur d'échos spéculaires, dans son expression la plus simple, consiste tout d'abord à calculer les quantités unitaires suivantes, en chaque point $P$ de la zone d'intérêt pour les paramètres suivants: $A_{ij}^m(P) :$ le champ ultrasonore pour chaque ensemble d'émetteur(s) $i$ et de récepteur(s) $j$ suivant le réglage défini lors de l'acquisition. Par réglage, on fait référence à l'ensemble des paramètres d'acquisition qui doivent être pris en compte pour le calcul du champ, listés précédemment. Cette grandeur peut être calculée au moyen d'un logiciel de simulation de propagation d'ondes élastodynamiques, par exemple le logiciel précité CIVA développé et commercialisé par le CEA, disponible dans la publication, « CIVA: An expertise platform for simulation and processing NDT data », Ultrasonics volume 44 Supplement, 22 December 2006, Pages e975-e979, Proceedings of Ultrasonics International (UI'05) and World Congress on Ultrasonics (WCU),

- $c_{ij}^m(P) :$ le compteur de réflexions égal à 1 si $\vec{n}_{ij}^m(P)$ est colinéaire à la normale au défaut $\vec{n}$, et à 0 sinon. Une façon d'estimer $c_{ij}^m(P)$ peut être donnée par :

$$c_{ij}^m(P) = \begin{cases} 1 & \text{si } \left| \vec{n}_{ij}^m(P) \cdot \vec{n} \right| = 1 \\ 0 & \text{sinon} \end{cases} \quad (3)$$

avec $\vec{n}_{ij}^m(P)$ la normale formée par la direction « aller » $\vec{d_i}$ et la direction « retour » $\vec{d_j}$, pour le mode de reconstruction *m,* correspondant respectivement au parcours de l'onde ultrasonore associé à l'ensemble du ou des émetteurs i, et au parcours de l'onde ultrasonore associée à l'ensemble du ou des récepteurs j. di désigne la direction du trajet de l'onde ultrasonore provenant de l'élément i et arrivant en P, et dj, la direction du trajet ultrasonore réfléchie en P et retournant vers l'élément j du capteur. Ces trajets peuvent être directs ou via un rebond dans la pièce inspectée.

Les contributions unitaires de chaque élément du capteur, pour un mode donné *m* et pour un point P du maillage résultent alors du produit du champ $A_{ij}^{m}(P)$ par le compteur de réflexion $c_{ij}^{m}(P)$.

L'énergie ultrasonore finale recherchée (pour sélectionner le mode de reconstruction le plus approprié pour détecter et caractériser un défaut) est alors déterminée en sommant toutes les contributions unitaires en chaque point *P* de la zone de reconstruction. Les points de la zone de reconstruction sont distribués par exemple sous la forme d'une grille dont les sommets correspondent aux points P. En notant cette énergie $E^{m}(P,\vec{n})$, une façon de l'estimer est donnée par la relation suivante :

$$E^{m}(P,\vec{n}) = \sum_{i,j=1}^{N} A_{ij}^{m}(P) c_{ij}^{m}(P,\vec{n}) \quad (4).$$

Pour le mode de reconstruction m, on obtient une valeur d'énergie $E^{m}(P,\vec{n})$ correspondant à l'énergie ultrasonore recueillie par le capteur (ensemble des éléments) après réflexion sur un défaut plan d'orientation connue pour un point du maillage P.

Le calcul de l'énergie est effectué pour plusieurs modes possibles de reconstruction *m,* pour l'ensemble des points P du maillage et sur une zone de reconstruction considérée. Ces valeurs d'énergie peuvent être représentées sous la forme d'une cartographie, ou d'un tableau qui indique pour chaque point donné P du maillage, la valeur d'énergie correspondante, pour un mode de reconstruction.

Le procédé va ensuite exploiter ces résultats afin de définir le mode de reconstruction *m* le plus approprié pour détecter et caractériser un défaut plan présent dans la zone de reconstruction.

Selon une variante de réalisation, le procédé va sélectionner la valeur d'énergie maximale dans le tableau et sélectionner le mode de reconstruction m correspondant à cette valeur, pour exécuter par exemple un algorithme de recherche de défauts.

Par exemple, il est possible de comparer la ou les valeurs d'énergies $E^{m}(P,\vec{n})$ à une valeur seuil Es et, à partir du résultat issu de la comparaison, de sélectionner les valeurs d'énergie supérieures à cette valeur seuil et donc les modes à utiliser pour détecter et caractériser un défaut dans une zone de reconstruction donnée.

Une autre manière de procéder consiste à utiliser un intervalle de valeurs d'énergie [Emin, Emax] pour sélectionner les modes à utiliser en se limitant à un nombre donné de modes de reconstruction. Dans cette variante le choix du ou des modes de reconstruction à utiliser, résulte d'un compromis entre le nombre de modes de reconstruction et les valeurs d'énergie permettant une bonne visualisation des défauts.

Selon une autre variante de réalisation, il est possible d'améliorer l'estimateur défini notamment par la formule (4) en prenant en compte d'autres quantités physiques telles que les coefficients de réflexion $R(\vec{n}_{ij},\vec{n})$ correspondant à l'interaction de l'onde avec une surface plane définie par la normale $\vec{n}$ au point P. $R(\vec{n}_{ij},\vec{n})$ peut être défini par des formules analytiques ou par un logiciel de simulation de propagation d'ondes élastodynamiques connu de l'homme du métier, tel que le logiciel CIVA précité.

Une façon de prendre en compte les coefficients de réflexion est la suivante :

$$E^{m}(P,\vec{n}) = \sum_{i,j=1}^{N} A_{ij}^{m}(P) R(\vec{n}_{ij},\vec{n}) c_{ij}(P,\vec{n}) \qquad (5).$$

Une autre variante consiste à appliquer une tolérance arbitraire ($\varepsilon$) au compteur de réflexions $c_{ij}^{m}(P)$, en considérant les valeurs du compteur suivantes:

$$c_{ij}^{m}(P) = \begin{cases} 1 & \text{si } \left| \vec{n}_{ij}^{m}(P) \cdot \vec{n} \right| = 1 \pm \varepsilon \\ 0 & \text{sinon} \end{cases} \qquad (6).$$

L'estimateur selon l'invention permet notamment d'obtenir une cartographie plus précise que celles obtenues par la mise en œuvre des méthodes connues de l'art antérieur et de sélectionner un mode de reconstruction le mieux adapté à la géométrie d'une pièce et à un défaut.

La figure 7 illustre le résultat obtenu par la mise en œuvre du procédé selon l'invention. Cet estimateur d'échos spéculaires peut être représenté sous forme de cartographie montrant la répartition spatiale de l'énergie dans la zone d'intérêt Zr. Dans ce cas, l'amplitude des énergies en chaque point P est codée sur une palette de couleurs, représentée par des zones de grisés nuancés sur la figure 7 avec une échelle correspondant à l'amplitude des échos spéculaires.

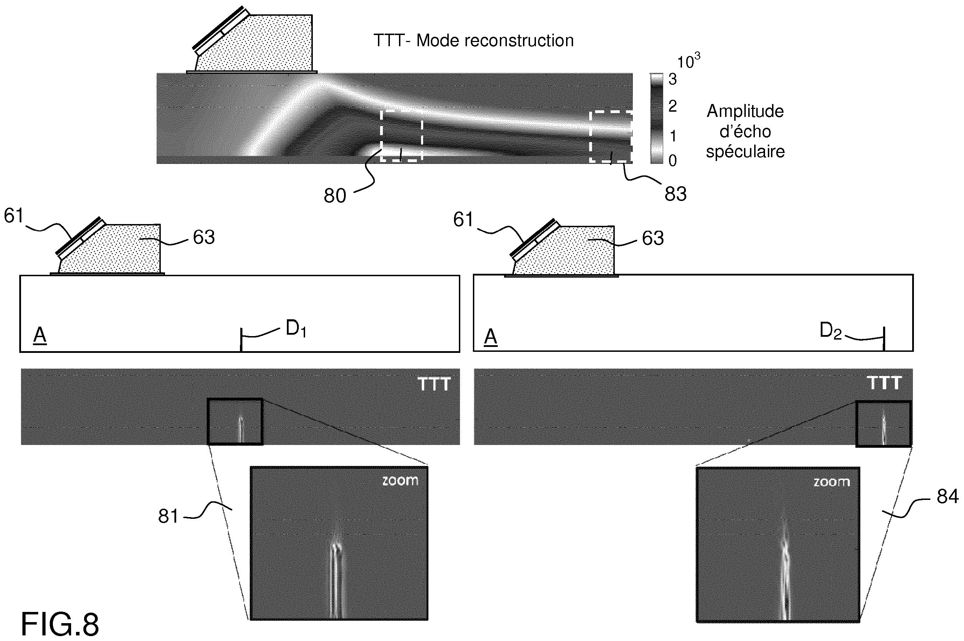

Un exemple de cartographie obtenue par la formule (4) est illustré sur la figure 8 pour un mode de reconstruction TTT et pour deux défauts plans situés à deux endroits de la pièce. Sur cet exemple, grâce aux informations fournies par cet estimateur, il est possible de prédire que la capacité du mode de reconstruction considéré à détecter un défaut plan vertical est proportionnelle à l'énergie calculée. Ainsi, dans les régions où l'énergie est faible (voire nulle), ce type de défaut ne sera pas détecté, et inversement, dans les régions où l'énergie est importante, les possibilités de détection seront maximales. Par exemple, pour la zone 80 qui est une région de forte détectabilité, le défaut plan D1 est correctement détecté sur toute sa hauteur, comme il est illustré en 81. Pour la zone 83 à détectabilité plus faible, le défaut vertical D2 est mal détecté, ce qui est représenté en 84.

La description s'applique pour différents modes de reconstruction, par exemple, le mode TLT, le mode TTL, le mode LLT, ou des modes de reconstruction connus de l'homme du métier, tels que ceux décrits dans le document de Jie Zhang et al, intitulé « Defect detection using ultrasonic arrays : the multi-mode total focusing method », NDT&E International, 43(2010) 123-133.

Le procédé selon l'invention permet de prédire quantitativement, pour une configuration donnée, la capacité d'un mode de reconstruction à pouvoir détecter un élément réflecteur dans une région précise d'une zone inspectée.

Les applications sont diverses, telles que la détection et la caractérisation (nature, position, orientation) de défauts dans le contrôle non destructif par ultrasons.

**Revendications**

1. Procédé pour déterminer au moins un mode de reconstruction m d'un objet réflecteur présentant une partie capable de générer des réflexions spéculaires d'ondes ultrasonores, au sein d'un volume donné Zr, **caractérisé en ce qu'**il comporte au moins les étapes suivantes :

   • pour chaque point P du volume donné Zr, déterminer une valeur de champ ultrasonore $A_{ij}^m(P)$ pour N couples (i, j) d'émetteurs-récepteurs et pour un mode de détection m,

   • calculer un nombre de réflexions de l'onde
   $$C^m(P,\vec{n}) = \sum_{i,j=1}^{N} c_{ij}^m(P,\vec{n})$$
   où

   $$c_{ij}^m = \begin{cases} 1 & \text{si } \left|\vec{n}_{ij}^m(P)\cdot\vec{n}\right| = 1 \\ 0 & \text{sinon} \end{cases}$$

   avec $\vec{n}_{ij}^m(P)$ la normale formée par la direction « aller » $\vec{d}_i$ et la direction « retour » $\vec{d}_j$ de l'onde ultrasonore émise et réfléchie par l'élément réflecteur,

   • calculer la valeur d'énergie $E^m(P,\vec{n})$ pour chaque point P de la zone Zr, avec $\vec{n}$ la normale à l'élément réflecteur et pour plusieurs modes de détection *m,* en sommant sur les N couples d'émetteurs-récepteurs, (i, j), le produit de la valeur de champ ultrasonore par le nombre de réflexions de l'onde : avec

   $$E^m(P,\vec{n}) = \sum_{i,j=1}^{N} A_{ij}^m(P) c_{ij}(P,\vec{n})$$

   • comparer la ou lesdites valeurs d'énergies $E^m(P,\vec{n})$ obtenues à un critère donné et à partir du résultat obtenu sélectionner au moins un mode de reconstruction *m* à utiliser pour détecter et caractériser l'élément réflecteur.

**2.** Procédé selon la revendication 1 **caractérisé en ce que** l'on détermine le ou les modes de reconstruction *m* à utiliser en choisissant les valeurs d'énergies $E^m(P,\vec{n})$ qui sont supérieures à une valeur seuil Es.

**3.** Procédé selon la revendication 1 **caractérisé en ce que** l'on détermine le ou les modes de reconstruction *m* à utiliser en limitant le nombre de mode de reconstruction à une valeur donnée, offrant le meilleur compromis entre énergie et dimension de la zone de reconstruction sélectionnée.

**4.** Procédé selon l'une des revendications 1 à 3 **caractérisé en ce que** le calcul de l'énergie prend en compte les coefficients de réflexion $R(\vec{n}_{ij},\vec{n})$ correspondant à l'interaction de l'onde avec une surface plane définie par la normale $\vec{n}$ à un point P :

$$E^m(P,\vec{n}) = \sum_{i,j=1}^{N} A_{ij}^m(P)R(\vec{n}_{ij},\vec{n})c_{ij}(P,\vec{n}).$$

**5.** Procédé selon l'une des revendications 1 à 4 **caractérisé en ce que** la valeur d'énergie est déterminée en tenant compte du nombre de réflexions pondéré par une tolérance arbitraire :

$$c_{ij}^m(P) = \begin{cases} 1 & \text{si } \left|\vec{n}_{ij}^m(P)\cdot\vec{n}\right| = 1 \pm \varepsilon \\ 0 & \text{sinon} \end{cases}$$

**6.** Procédé selon l'une des revendications 1 à 5 **caractérisé en ce que** l'élément réflecteur est un défaut plan disposé dans une pièce à inspecter, tel qu'une faille, une entaille.

**7.** Dispositif pour déterminer au moins un mode de détection pour un élément réflecteur d'ondes ultrasonores, au sein d'un volume donné Zr et par réflexions spéculaires et caractériser un ou plusieurs défauts dans une pièce A comportant un transducteur ultrasonore (61) pour émettre et recevoir des ondes ultrasonores et au moins un dispositif de traitement (65), ledit dispositif de traitement est configuré pour exécuter le procédé selon la revendication 1 et pour déterminer et exécuter le ou les modes de reconstruction obtenus par la mise en oeuvre des étapes du procédé selon la revendication 1 afin de reconstruire une image de la pièce inspectée à partir de signaux reçus sur le transducteur ultrasonore.

**8.** Application du procédé selon l'une des revendications 1 à 6 pour la détection de défauts dans une pièce soumise à des ondes ultrasonores.

**Patentansprüche**

**1.** Verfahren zum Bestimmen mindestens eines Rekonstruktionsmodus m eines reflektierenden Objekts, welches einen Abschnitt aufweist, welcher in der Lage ist, Spiegelreflexionen von Ultraschallwellen zu erzeugen, innerhalb eines gegebenen Volumens Zr, **dadurch gekennzeichnet, dass** es mindestens folgende Schritte umfasst:

• für jeden Punkt P des gegebenen Volumens Zr, Bestimmen eines Wertes eines Ultraschallfeldes $A_{ij}^m(P)$ für N Paare (i, j) von Sendern und Empfängern und für einen Erkennungsmodus m,

$$C^m(P,\vec{n}) = \sum_{i,j=1}^{N} c_{ij}^m(P,\vec{n}),$$

• Berechnen einer Anzahl an Reflexionen der Welle                 worin

$$c_{ij}^m = \begin{cases} 1 & wenn \left|\vec{n}_{ij}^m(P)\cdot\vec{n}\right| = 1 \\ 0 & ansonsten \end{cases}$$

wobei $\vec{n}_{ij}^m(P)$ die Normale ist, welche durch die "Hinweg-" Richtung $\vec{d}_i$ und die "Rückweg-" Richtung $\vec{d}_i$ der

Ultraschallwelle gebildet wird, welche durch das Reflektorelement ausgesendet und reflektiert wird,

• Berechnen des Energiewertes $E^m(P,\vec{n})$ für jeden Punkt P des Bereichs Zr, wobei $\vec{n}$ die Normale des Reflektorelements ist und für mehrere Detektionsmodi m, durch Summieren über die N Paare von Sendern und Empfängern (i, j), des Produkts des Wertes des Ultraschallfeldes mit der Anzahl der Wellenreflexionen: wobei

$$E^m(P,\vec{n}) = \sum_{i,j=1}^{N} A_{ij}^m(P) c_{ij}(P,\vec{n})$$

• Vergleichen des oder der erzielten Energiewerte(s) $E^m(P,\vec{n})$ mit einem gegebenen Kriterium und anhand des erzielten Ergebnisses, Auswählen von mindestens einem Rekonstruktionsmodus m, welcher verwendet werden soll, um das Reflektorelement zu erkennen und zu charakterisieren.

2. Verfahren nach Anspruch 1, **dadurch gekennzeichnet, dass** man den Rekonstruktionsmodus oder die Rekonstruktionsmodi m, der/die verwendet werden soll(en), bestimmt, indem man die Energiewerte $E^m(P,\vec{n})$ auswählt, welche einen Schwellenwert Es überschreitet.

3. Verfahren nach Anspruch 1, **dadurch gekennzeichnet, dass** man den Rekonstruktionsmodus oder die Rekonstruktionsmodi m, der/die verwendet werden soll(en), bestimmt, indem man die Anzahl der Rekonstruktionsmodi auf einen gegebenen Wert begrenzt, welcher den besten Kompromiss zwischen Energie und Abmessung des ausgewählten Rekonstruktionsbereichs bietet.

4. Verfahren nach einem der Ansprüche 1 bis 3, **dadurch gekennzeichnet, dass** die Berechnung der Energie die Reflexionskoeffizienten $R(\vec{n}_{ij},\vec{n})$ berücksichtigt, welche der Interaktion der Welle mit einer ebenen Oberfläche entsprechen, welche durch die Normale $\vec{n}$ eines Punktes P definiert wird:

$$E^m(P,\vec{n}) = \sum_{i,j=1}^{N} A_{ij}^m(P) R(\vec{n}_{ij},\vec{n}) c_{ij}(P,\vec{n}).$$

5. Verfahren nach einem der Ansprüche 1 bis 4, **dadurch gekennzeichnet, dass** der Energiewert bestimmt wird, indem die Anzahl der Reflexionen, gewichtet mit einer willkürlichen Toleranz, berücksichtigt wird:

$$c_{ij}^m(P) = \begin{cases} 1 & wenn \; |\vec{n}_{ij}^m(P) \cdot \vec{n}| = 1 \pm \varepsilon \\ 0 & ansonsten \end{cases}.$$

6. Verfahren nach einem der Ansprüche 1 bis 5, **dadurch gekennzeichnet, dass** das Reflektorelement ein ebener Fehler ist, welcher in einem zu prüfenden Teil angeordnet ist, wie beispielsweise eine Kluft oder eine Kerbe.

7. Vorrichtung zum Bestimmen mindestens eines Erkennungsmodus eines Reflektorelements von Ultraschallwellen, innerhalb eines gegebenen Volumens Zr und durch Spiegelreflexionen, und zum Charakterisieren eines oder mehrerer Fehler in einem Teil A, umfassend einen Ultraschallwandler (61) zum Aussenden und Empfangen von Ultraschallwellen und mindestens eine Verarbeitungsvorrichtung (65), wobei die Verarbeitungsvorrichtung konfiguriert ist, um das Verfahren nach Anspruch 1 auszuführen und um den oder die durch die Umsetzung der Schritte des Verfahrens nach Anspruch 1 erzielten Rekonstruktionsmodus/Rekonstruktionsmodi zu bestimmen und auszuführen, um ein Bild des geprüften Teils anhand von Signalen zu rekonstruieren, welche an dem Ultraschallwandler empfangen werden.

8. Anwendung des Verfahrens nach einem der Ansprüche 1 bis 6 zum Erkennen von Fehlern in einem Teil, welches Ultraschallwellen unterworfen wird.

**Claims**

1. A method for determining at least one mode m of reconstruction of a reflecting object having a portion capable of generating specular reflections of ultrasonic waves, within a given volume Zr, **characterized in that** it comprises at least the following steps:

• for each point P of the given volume Zr, determining an ultrasonic field value $A_{ij}^{m}\left(P\right)$ for N emitter-receiver pairs (i, j) and for one detection mode m,

$$C^{m}(P,\vec{n}) = \sum_{i,j=1}^{N} c_{ij}^{m}\left(P,\vec{n}\right)$$

• computing a number of reflections of the wave, where

$$c_{ij}^{m} = \begin{cases} 1 & if \ \left|\vec{n}_{ij}^{m}(P) \cdot \vec{n}\right| = 1 \\ 0 & if \ not \end{cases}$$

with $\vec{n}_{ij}^{m}(P)$ the normal formed by the "forward" direction Cl and the "backward" direction $\vec{d}_j$ of the ultrasonic wave emitted and reflected by the reflecting element,
• computing the energy value $E^m(P,\vec{n})$ for each point P of the zone Zr, with $\vec{n}$ the normal to the reflecting element, and for several detection modes m, by summing, over the N emitter-receiver pairs, (i, j), the product of the value of the ultrasonic field and the number of reflections of the wave: with

$$E^{m}(P,\vec{n}) = \sum_{i,j=1}^{N} A_{ij}^{m}\left(P\right)c_{ij}(P,\vec{n})$$

• comparing said one or more obtained energy values $E^m(P,\vec{n})$ to a given criterion and on the basis of the obtained result, selecting at least one reconstruction mode m to be used to detect and characterize the reflecting element.

2. The method as claimed in claim 1, **characterized in that** the one or more reconstruction modes m to be used are determined by choosing the energy values $E^m(P,\vec{n})$ that are higher than a threshold value Es.

3. The method as claimed in claim 1, **characterized in that** the one or more reconstruction modes m to be used are determined by limiting the number of reconstruction modes to a given value, providing the best compromise between energy and dimension of the selected reconstruction zone.

4. The method as claimed in one of claims 1 to 3, **characterized in that** the computation of energy takes into account the reflection coefficients $R(\vec{n}_{ij},\vec{n})$ corresponding to the interaction of the wave with a planar surface defined by the normal $\vec{n}$ to a point $P$:

$$E^{m}(P,\vec{n}) = \sum_{i,j=1}^{N} A_{ij}^{m}\left(P\right)R(\vec{n}_{ij},\vec{n})c_{ij}(P,\vec{n}).$$

5. The method as claimed in one of claims 1 to 4, **characterized in that** the energy value is determined by taking into account the number of reflections, weighted by an arbitrary tolerance:

$$c_{ij}^{m}(P) = \begin{cases} 1 & if \ \left|\vec{n}_{ij}^{m}(P) \cdot \vec{n}\right| = 1 \pm \varepsilon \\ 0 & if \ not \end{cases}.$$

6. The method as claimed in one of claims 1 to 5, **characterized in that** the reflecting element is a planar defect located in a part to be inspected, such as a fault or notch.

7. A device for determining at least one mode of detection for an element that reflects ultrasonic waves, within a given volume Zr and by specular reflections, and for characterizing one or more defects in a part A, comprising an ultrasound transducer (61) for emitting and receiving ultrasonic waves and at least one processing device (65), wherein said processing device is configured to perform the method as claimed in claim 1 and to determine and perform the one or more reconstruction modes obtained by executing the steps of the method as claimed in claim 1 in order to reconstruct an image of the inspected part from signals received on the ultrasound transducer.

8. The application of the method as claimed in one of claims 1 to 6 for the detection of defects in a part subjected to ultrasonic waves.

Trajet direct

## FIG.1a

Trajet écho de coin

## FIG.1b

Trajet indirect

## FIG.1c

## FIG.2

Récepteur j

Emetteur i

Loi de Snell-Descartes :

$$\frac{\sin\ \theta_i}{v_i} = \frac{\sin\ \theta_j}{v_j}$$

$\vec{d_j}$

$\vec{n}_{ij}^{\,m}$

$\theta_j$

D

$\vec{n}$

$\theta_i$

P

$\vec{d_i}$

A

# FIG.3

j

i

T

$\vec{n}$

T

D

P

T

A

Zr

# FIG.4

Mode TTT

Z1

$N^2$

0

FIG.5    Art antérieur

TTT - défaut plan vertical

63

61

Amplitude
d'écho
spéculaire

$10^3$
3
2
1
0

FIG.7

FIG.6

FIG.8

EP 3 526 597 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3029636

**Littérature non-brevet citée dans la description**

- **C.HOLMES ; B.W. DRINKWATER ; P.D. WILCOX.** Post-Processing of the full matrix of ultrasonic transmit-receive array data for non-destructive evaluation. *NDT&E international,* vol. 38, 701-711
- **A. FIDAHOUSSEN ; P. CALMON ; M. LAMBERT ; S. PAILLARD ; S. CHATILLON.** Imaging of defects in several complex configurations by simulation-helped processing of ultrasonic array data. *Review of progress in QNDE,* 2010, vol. 29, 847-854
- **S. PAILLARD et al.** *New ultrasonic array imaging of crack-type defects based on simulation-helped processing,* Août 2010

- **ALEX FIDAHOUSSEN.** *Développement de méthodes de reconstruction ultrasonore pour la localisation et la caractérisation de défauts,* 21 Septembre 2012
- CIVA: An expertise platform for simulation and processing NDT data. *Ultrasonics,* Décembre 2006, vol. 44 (22), e975-e979
- **JIE ZHANG et al.** Defect detection using ultrasonic arrays : the multi-mode total focusing method. *NDT&E International,* 2010, vol. 43, 123-133